# EUROPÄISCHE PATENTSCHRIFT

(11) **EP 3 480 929 B1**
(45) Veröffentlichungstag und Bekanntmachung des Hinweises auf die Patenterteilung: **28.04.2021**
(21) Anmeldenummer: 17199873.5
(22) Anmeldetag: 03.11.2017
(51) Int. Cl.: H02K 21/14, H02K 5/20, H02K 9/19, H02K 15/02, H02K 1/20

(54) **GEKÜHLTES GEHÄUSE FÜR DEN STATOR EINES DIREKTANTRIEBS**
COOLED HOUSING FOR THE STATOR OF A DIRECT DRIVE
CARTER REFROIDI POUR LE STATOR D'ENTRAÎNEMENT DIRECT

(43) Veröffentlichungstag der Anmeldung: 08.05.2019
(73) Patentinhaber: ETEL S.A., 2112 Môtiers (CH)
(72) Erfinder: POURCHET, Johann, 25650 La Chaux (FR); CHECHENEV, Dmitri, 2000 Neuchàtel (CH); LOCATELLI, Christian, 2000 Neuchàtel (CH); WOJCIECH, Zak, 2000 Neuchàtel (CH); GUIDOT, Julien, 25300 Arcon (FR)
(74) Vertreter: Pleyer, Hans Anno

(56) Entgegenhaltungen:
- DE-A1-102009 031 727
- JP-A- 2013 135 567
- US-A1- 2011 227 446
- US-A1- 2013 169 077

## Beschreibung

### BEZEICHNUNG DER ERFINDUNG

Gekühltes Gehäuse für den Stator eines Direktantriebs

### GEBIET DER TECHNIK

Die vorliegende Erfindung betrifft ein gekühltes Gehäuse für den Stator eines Direktantriebs. Solche Direktantriebe sind dafür gedacht, ein hohes Drehmoment auch bei niedrigen Drehzahlen oder sogar im Stillstand zu erzeugen. Eine Kühlung durch einen auf der Welle des Antriebs montierten Ventilator kommt daher nicht in Betracht. Solche Direktantriebe werden stattdessen häufig über Kühlkanäle im Bereich des Stators gekühlt.

### STAND DER TECHNIK

Direktantriebe, und insbesondere Synchronmotoren, die ohne ein zwischengeschaltetes Getriebe ihr Drehmoment an eine Applikation abgeben, sind beispielsweise in der US 5642013 beschrieben. Einen rotatorischen Motor zeigt die Figur 15. Ein mit Magneten besetzter Rotor (Sekundärteil) dreht sich innerhalb eines mit Spulen besetzten Stators (Primärteil). Durch geeignete Anordnung der Spulen und Magnete können die dabei auftretenden Rastkräfte klein gehalten werden. Um hohe Drehmomente zu erzeugen, fließen in den Spulen selektiv hohe Ströme, die bei niedrigen Drehzahlen oder gar im Stillstand lokal zu einem großen Wärmeeintrag führen. Eine Kühlung solcher Motoren ist daher wichtig.

Die EP 2680408 B1 offenbart hierzu ein Gehäuse für einen solchen Synchronmotor, auf dessen äußerer Mantelfläche Kühlkanäle verlaufen, die von einem dünnen Blech auf der Mantelfläche des Gehäuses verschlossen sind. Eine axiale Zuführung eines Kühlmediums ist unmittelbar im Gehäuse vorgesehen. Das Blech ist mit dem Gehäuse verschweißt, um die Kühlkanäle abzudichten. Das Gehäuse dieses Motors muss also für die spezielle Variante der Kühlung vorbereitet sein. Man bezeichnet diese Variante auch als geschlossene Kühlung, da der Kühlkreislauf schon vor dem Einbau des Motors in eine Anwendung geschlossen und abgedichtet ist. Eine Verwendung dieses Motors in einer ebenfalls üblichen Variante, gemäß der die Abdichtung der umlaufenden Kühlkanäle erst durch die Montage in einer vom Anwender des Motors zur Verfügung gestellten Aufnahme für den Motor erfolgt, ist mit diesem Motor nicht möglich. Diese Variante wird auch als offene Kühlung bezeichnet, und wird manchmal bevorzugt, da die schon zum Zwecke der Abdichtung zumindest in Teilbereichen sehr genau bearbeitete Mantelfläche des Gehäuses auch zur genauen Ausrichtung des Antriebs dienen kann. In der geschlossenen Variante der Kühlung ist dieser genau bearbeitete Teilbereich nicht zugänglich.

Die US 2011/0227446 A1 offenbart einen ganz ähnlichen Motor, bei dem eine radiale Zuführung des Kühlmittels durch Öffnungen in der Abdeckung vorgesehen ist. Die Befestigung dieses Motors erfolgt über stirnseitig am Gehäuse befestigte Lagerschilde.

Bisher mussten daher verschiedene Gehäusevarianten für solche Direktantriebe bereitgestellt werden, um die Antriebe sowohl für die geschlossene als auch für die offene Variante der Kühlung anbieten zu können.

### ZUSAMMENFASSUNG DER ERFINDUNG

Es ist daher Aufgabe der Erfindung, ein gekühltes Gehäuse für den Stator eines Direktantriebs anzugeben, bei dem das Gehäuse sowohl für eine geschlossene als auch für eine offene Kühlung geeignet ist, und bei dem auch im Falle der geschlossenen Kühlung als Lagereferenz dienende Teilbereiche der Mantelfläche des Gehäuses zugänglich bleiben.

Diese Aufgabe wird gelöst durch ein gekühltes Gehäuse gemäß Anspruch 1. Vorteilhafte Details des gekühlten Gehäuses ergeben sich auch aus den von Anspruch 1 abhängigen Ansprüchen.

Es wird ein gekühltes Gehäuse für den Stator eines Direktantriebs offenbart, bei dem auf einer äußeren Mantelfläche des Gehäuses Kühlkanäle verlaufen, die durch eine auf der Mantelfläche angeordnete, ringförmige Abdeckung abgedichtet sind. Die Abdeckung weist Öffnungen als Einlass und Auslass für ein Kühlmedium auf. Die Abdeckung ist so außerdem angeordnet, dass Teilbereiche der Mantelfläche des Gehäuses frei bleiben.

Die Abdeckung ist in axialer Richtung kürzer als das Gehäuse und mittig auf dem Gehäuse angeordnet, so dass an beiden Enden des Gehäuses Teilbereiche der Mantelfläche des Gehäuses zugänglich bleiben, die bei der Montage des Motors in einer Applikation als Referenz dienen können. Damit ist es möglich, das Gehäuse bzw. den ganzen Motor sowohl in einer Variante mit geschlossener Kühlung als auch in einer Variante mit offener Kühlung anzubieten, ohne hierfür verschiedene Gehäusevarianten vorhalten zu müssen. Für die geschlossene Variante wird die Abdeckung mit einem Schrumpfprozess am Gehäuse befestigt, wobei O-Ringe im Bereich der Kanten der Abdeckung für eine Abdichtung sorgen. Ohne separate Abdeckung kann der Motor auch in eine entsprechende Aufnahme einer Kundenapplikation eingebaut werden, wobei diese Aufnahme dann die Funktion der Abdeckung übernimmt.

Es ist außerdem ein Anschlussstück vorgesehen, das an die Abdeckung geschraubt werden kann, mit dem wahlweise eine radiale, axiale oder auch tangentiale Zuführung des Kühlmediums erfolgen kann.

Die besondere Ausgestaltung des Gehäuses ermöglicht es, ausgehend von einem Gehäuse für die offene Variante der Kühlung einen Antrieb mit geschlossener Kühlung aufzubauen, ohne dafür ein modifiziertes Gehäuse zu benötigen. Die Vorteile der offenen Kühlung bleiben dabei erhalten. Es ist damit möglich, einen auf Vorrat gefertigten Stator sowohl für die offene Variante der Kühlung zu verwenden, als auch für die geschlossene Variante. Für letztere wird innerhalb von Minuten eine Abdeckung aufgeschrumpft und auf Dichtigkeit geprüft. Diese Flexibilität reduziert den Aufwand in der Fertigung und bei der Lagerhaltung erheblich.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: den Stator eines Direktantriebs mit seinem erfindungsgemäßen Gehäuse,
- Figur 2: eine Abdeckung für das erfindungsgemäße Gehäuse gemäß einem ersten Ausführungsbeispiel,
- Figur 3: ein dazu passendes Anschlussstück in verschiedenen Ansichten,
- Figur 4: den Stator mit geschlossener Kühlung gemäß erstem Ausführungsbeispiel im montierten Zustand,
- Figur 5 und 6: Schnittansichten des montierten Stators mit dem erfindungsgemäßen Gehäuse,
- Figur 7: eine Abdeckung für das erfindungsgemäße Gehäuse gemäß einem zweiten Ausführungsbeispiel,
- Figur 8: ein dazu passendes Anschlussstück in verschiedenen Ansichten,
- Figur 9: den Stator mit geschlossener Kühlung gemäß zweitem Ausführungsbeispiel im montierten Zustand.

### BESCHREIBUNG DER AUSFÜHRUNGSFORMEN

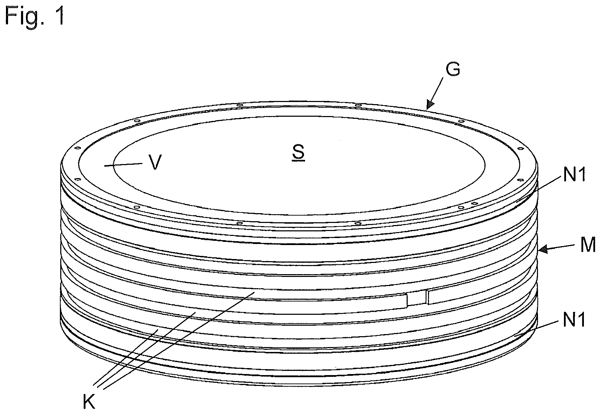

Die Figur 1 zeigt einen Stator S eines Synchronmotors, der in einem Gehäuse G angeordnet ist. Die Spulen des Stators S weisen zum Zentrum des Stators S und sind von einer Vergussmasse V umhüllt. Im Inneren des Stators S ist ein hier nicht dargestellter Rotor angeordnet, auf dessen äußerem Umfang Magnete befestigt sind. Durch eine geeignete Bestromung der Spulen kann der Rotor in eine Drehbewegung versetzt werden, bzw. ein Drehmoment aufbringen. Auf der äußeren Mantelfläche M des Gehäuses G sind Kühlkanäle K angeordnet, die sich auf einen mittleren Bereich beschränken. In einem äußeren Bereich der Mantelfläche M, nahe der beiden Stirnseiten des Gehäuses G, sind umlaufende Nuten N1 zur Aufnahme von Dichtringen eingebracht.

Erfindungsgemäß sind die beiden äußeren Bereiche der Mantelfläche M, die auch die umlaufenden Nuten N1 aufweisen, besonders genau bearbeitet. Einerseits sollen diese Bereiche entweder mittels einer separaten Abdeckung oder durch eine entsprechende applikationsseitige Aufnahme den Austritt von Kühlmittel verhindern, andererseits dienen diese besonders genau bearbeiteten Teilbereiche auch als mechanische Referenz für den Einbau des Antriebs.

Das in der Figur 1 gezeigte erfindungsgemäße Gehäuse G kann nun sowohl für die geschlossene als auch für die offene Variante der Kühlung verwendet werden. Die für die geschlossene Variante der Kühlung notwendigen weiteren Merkmale werden in den folgenden Figuren beschrieben.

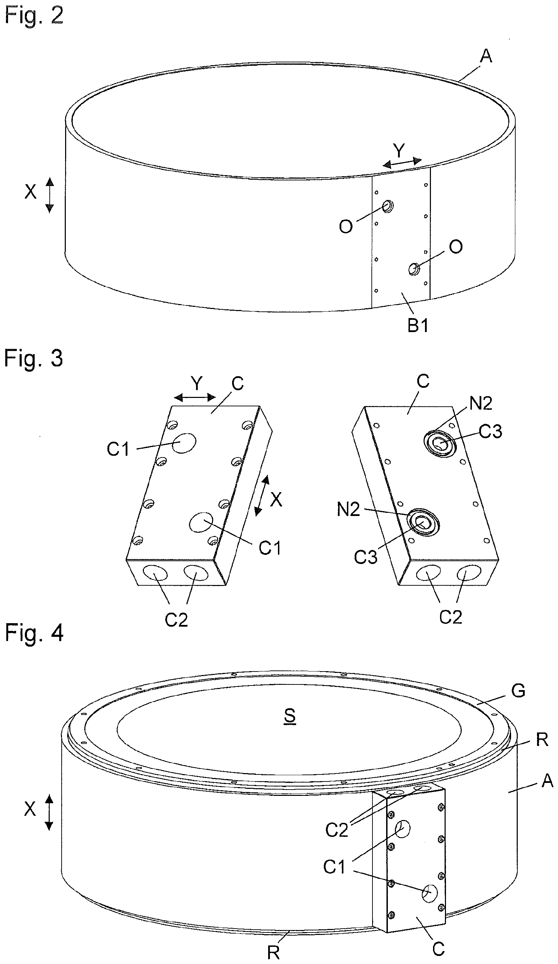

In den Figuren 2 - 4 ist ein erstes Ausführungsbeispiel dargestellt. Die Figur 2 zeigt eine ringförmige oder zylindrische Ummantelung oder Abdeckung A, die beispielsweise mittels eines Schrumpfprozesses auf das in der Figur 1 dargestellte erfindungsgemäße Gehäuse G aufgebracht wird. Die Abdeckung A weist auf ihrer Außenseite einen flachen, nicht gekrümmten Bereich B1 auf, der nach einem Drehprozess zur Herstellung der Abdeckung A gefräst werden kann. Zwei Öffnungen O liegen jeweils über einem der Kühlkanäle K, so dass durch diese Öffnungen O Kühlmedium (z.B. 30% Glykol in Wasser) zugeführt bzw. abgeführt werden kann. Die aus Stahl gefertigte Abdeckung A sollte eine Dicke von ca. 5 mm - 8 mm aufweisen, um einerseits stabil genug zu sein und andererseits nicht zu viel zusätzliches Gewicht einzubringen und auch nicht unnötigen zusätzlichen Bauraum zu verbrauchen. Die Abdeckung A weist außerdem Gewindebohrungen zur Befestigung eines Anschlussstückes auf.

Die Figur 3 zeigt so ein Anschlussstück C in zwei verschiedenen Ansichten. Dieses Anschlussstück C ist dazu vorgesehen, auf den flachen Bereich B1 der Abdeckung A aufgesetzt und mit diesem verschraubt zu werden. Das Anschlussstück C weist zwei radiale Gewindeöffnungen C1 und zwei axiale Gewindeöffnungen C2 auf. Eines der beiden Paare kann mit Anschlussschläuchen für Kühlmedium verbunden werden, das andere, nicht benötigte Paar kann verschlossen werden. Die Gewindeöffnungen C1, C2 sind mit weiteren Öffnungen C3 im Anschlussstück C verbunden, die mit den Öffnungen O der Abdeckung A korrespondieren. Die weiteren Öffnungen C3 sind jeweils mit einer Nut N2 umgeben, in die Dichtringe eingelegt werden können. Selbstverständlich können auch Anschlussstücke C verwendet werden, die nur ein Paar von Gewindeöffnungen C1 oder C2 aufweisen. Die Variante mit axialen und radialen Gewindeöffnungen C1, C2 ist aber flexibler einsetzbar.

Die Figur 4 zeigt das Gehäuse G mit der Abdeckung A und dem Anschlussstück C im montierten Zustand. Hierfür wird nach dem Aufschrumpfen der Abdeckung A auf das Gehäuse G das Anschlussstück C an den flachen Bereich B1 der Abdeckung A geschraubt. Man erkennt schon in dieser Figur 4, dass die axiale Länge der Abdeckung A (also in Richtung X) kleiner ist als die entsprechende Länge des Gehäuses G. Teilbereiche R der Mantelfläche M des Gehäuses G sind daher nicht von der Abdeckung A bedeckt und damit für die Montage des Antriebs zugänglich. In axialer Richtung X sollten diese Teilbereiche R wenigstens 2 mm breit sein.

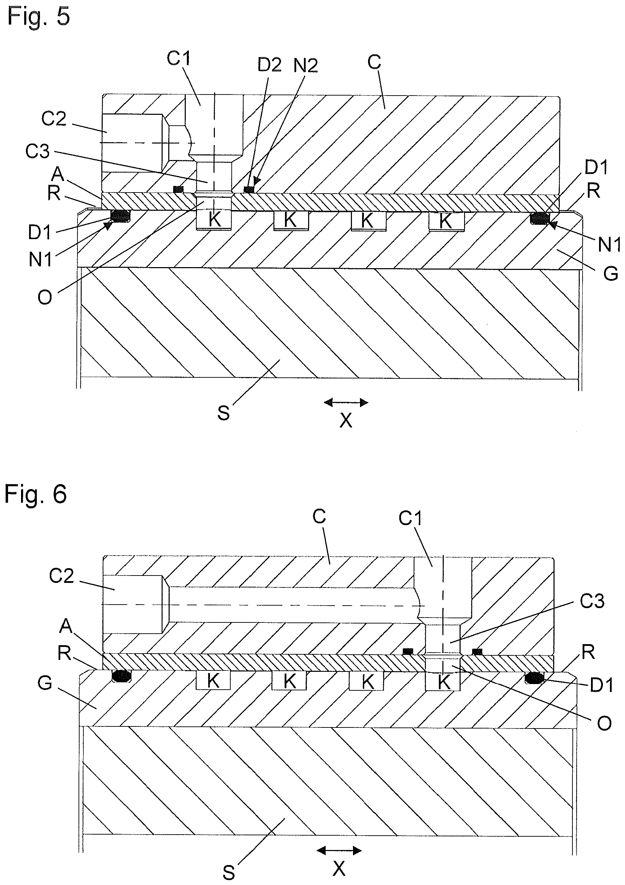

Die Figuren 5 und 6 zeigen jeweils einen Schnitt durch den Stator S, das erfindungsgemäße Gehäuse G und dessen für eine geschlossene Kühlung notwendige Abdeckung A mit Anschlussstück C.

Zunächst ist dargestellt, dass jeweils eine der radialen Gewindeöffnungen C1 und eine der axialen Gewindeöffnungen C2 mit einer der weiteren Öffnungen C3 verbunden sind, wobei diese weiteren Öffnungen C3 des Anschlussstücks C mit den Öffnungen O der Abdeckung A und darunter liegenden Kühlkanälen K korrespondieren. Um diese Anordnung zu ermöglichen ist es vorteilhaft, wenn die Öffnungen O sowohl in axialer Richtung X als auch in tangentialer Richtung Y gegeneinander versetzt sind. Der axiale Versatz ist durch Vergleich der Figuren 5 und 6 gut zu erkennen, der tangentiale Versatz wird in der Figur 2 sehr deutlich.

Auch in den Figuren 5 und 6 ist gut zu erkennen, dass die Teilbereiche R nicht von der Abdeckung A abgedeckt sind, so dass diese besonders genau bearbeiteten Teilbereiche R für die Montage des Motors in einer Applikation zugänglich sind. Die Teilbereiche R mit besonders genauer Bearbeitung (z.B. mit einem Mittenrauwert von Ra = 1,6 µm und einer hohen Anforderung an Maßhaltigkeit) erstrecken sich dabei jeweils bis unterhalb der Abdeckung A und umfassen jeweils auch noch die Nuten N1, in die Dichtringe D1 eingelegt sind. Im mittleren Bereich des Gehäuses G ist die Bearbeitung weniger genau (z.B. mit einem Mittenrauwert von Ra = 3,2 µm und einer reduzierten Anforderung an Maßhaltigkeit), denn eine Abdichtung der Kühlkanäle K durch die Abdeckung A untereinander ist weder notwendig noch erwünscht. Durch das Kühlmedium, das von einem Kühlkanal K über den trennenden Steg hinweg in den nächsten Kühlkanal K fließt, wird auch der Steg zwischen diesen Kanälen K besser gekühlt. Zwischen den Stegen und der Abdeckung A wird daher sogar ein Spalt von ca. 0,1 mm bis 0,2 mm vorgesehen. Auch dieser Weg des Kühlmediums trägt zum Druckabfall zwischen Einlass und Auslass des Kühlmediums bei. Dieser Druckabfall liegt ja nach Größe des Motors zwischen 1 bar und 5 bar.

Die weiteren Öffnungen C3 des Anschlussstücks C sind noch mit Dichtringen D2 abgedichtet, die in die Nuten N2 eingelegt sind. Sie lassen sich nach dem Abbau des Anschlussstückes C leicht auswechseln.

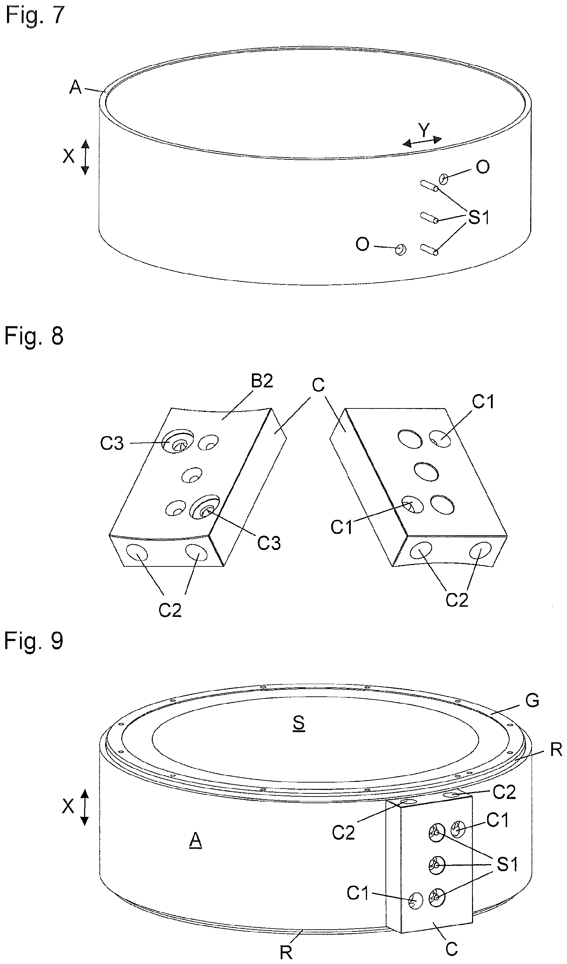

Die Figuren 7 - 9 beschreiben eine weitere Ausführungsform der Erfindung, die zu einer Kostenersparnis im Vergleich zur ersten Ausführungsform führen soll. Es sei hier nur auf die wesentlichen Unterschiede zu der in den Figuren 2 - 4 dargestellten ersten Ausführungsform eingegangen.

Die Abdeckung A weist keinen flachen oder ebenen Bereich B1 auf, sie ist daher einfacher herzustellen. Stattdessen weist das Anschlussstück C auf seiner der Abdeckung A zugewandten Seite einen gekrümmten Bereich B2 auf, dessen Krümmung mit der Krümmung der Abdeckung A korrespondiert. Während das Anschlussstück C gemäß der ersten Ausführungsform für jeden Durchmesser des Gehäuses G geeignet ist, muss das Anschlussstück C gemäß dieser zweiten Ausführungsform jeweils passend zum Durchmesser des Gehäuses G gefertigt werden. Auch in dieser zweiten Ausführungsform bleiben die Teilbereiche R für eine Montage des Motors zugänglich. An der Abdeckung A sind radial abstehende Schrauben S1 angeschweißt, auf die das Anschlussstück C aufgesteckt und mit denen das Anschlussstück C an der Abdeckung A befestigt wird. Die weiteren Öffnungen C3 sind nun nicht von einer Nut umgeben, sondern lediglich mit Vertiefungen versehen, in die passende O-Ringe eingelegt werden können.

In einer Abwandlung der beiden vorgestellten Ausführungsbeispiele kann das Anschlussstück C auch Gewindeöffnungen zur tangentialen Zuführung von Kühlmittel aufweisen, und zwar zusätzlich zu den radialen und axialen Gewindeöffnungen C1, C2, oder auch als Ersatz für eine dieser beiden, oder als einzige Zuführung.

## Patentansprüche

1. Gekühltes Gehäuse (G) für den Stator (S) eines Direktantriebs, bei dem auf einer äußeren Mantelfläche (M) des Gehäuses (G) Kühlkanäle (K) verlaufen, die durch eine auf der Mantelfläche (M) angeordnete, ringförmige Abdeckung (A) abgedichtet sind, wobei die Abdeckung (A) Öffnungen (O) als Einlass und Auslass für ein Kühlmedium aufweist, **dadurch gekennzeichnet, dass** die Abdeckung (A) so angeordnet ist, dass Teilbereiche (R) der Mantelfläche (M) des Gehäuses (G) nicht von der Abdeckung (A) abgedeckt sind, und dass die Abdeckung (A) in axialer Richtung (X) kürzer ist als die Mantelfläche (M) des Gehäuses (G), und dass die Teilbereiche (R) zwei stirnseitig an der Mantelfläche (M) umlaufende, ringförmige Bereiche sind, die bezüglich des Mittenrauwerts (Ra) und der Maßhaltigkeit mit einer höheren Genauigkeit bearbeitet sind als ein mit den Kühlkanälen (K) ausgestatteter mittlerer Bereich der Mantelfläche (M) zwischen den Teilbereichen (R), und dass die Teilbereiche (R) durch ihre Zugänglichkeit bei der Montage des Direktantriebs eine Lagereferenz für die Montage des Stators (S) und somit auch eine mechanische Referenz für einen Einbau des Direktantriebs bilden.

2. Gekühltes Gehäuse nach Anspruch 1, **dadurch gekennzeichnet, dass** die Teilbereiche (R) in axialer Richtung (X) mindestens 2 mm breit sind.

3. Gekühltes Gehäuse nach einem der vorhergehenden Ansprüche, **dadurch gekennzeichnet, dass** stirnseitig und beidseits der Kühlkanäle (K) zwischen der Abdeckung (A) und dem Gehäuse (G) Dichtungen (D1) in Nuten (N1) des Gehäuses (G) angeordnet sind.

4. Gekühltes Gehäuse nach einem der vorhergehenden Ansprüche, **dadurch gekennzeichnet, dass** die Abdeckung (A) auf das Gehäuse (G) aufgeschrumpft ist.

5. Gekühltes Gehäuse nach einem der vorhergehenden Ansprüche, **dadurch gekennzeichnet, dass** die Öffnungen (O) bezüglich der Mantelfläche (M) in axialer Richtung (X) und in tangentialer Richtung (Y) gegeneinander versetzt sind.

6. Gekühltes Gehäuse nach einem der vorhergehenden Ansprüche, **dadurch gekennzeichnet, dass** ein Anschlussstück (C) mit der Abdeckung (A) verbunden ist, und dass das Anschlussstück (C) axiale und/oder radiale und/oder tangentiale Gewindeöffnungen (C1, C2) für die Kühlmediumversorgung aufweist, die mit den Öffnungen (O) der Abdeckung (A) korrespondieren.

7. Gekühltes Gehäuse nach Anspruch 6, **dadurch gekennzeichnet, dass** die Abdeckung (A) einen ebenen Bereich (B1) aufweist, der als Anlagefläche für das Anschlussstück (C) dient.

8. Gekühltes Gehäuse nach Anspruch 6, **dadurch gekennzeichnet, dass** das Anschlussstück (C) einen gekrümmten Bereich (B2) aufweist, der als Anlagefläche für die Abdeckung (A) dient.

9. Direktantrieb, dessen Stator (S) in einem Gehäuse (G) nach einem der vorhergehenden Ansprüche angeordnet ist.

## Claims

1. Cooled housing (G) for the stator (S) of a direct drive, in which cooling channels (K) run on an outer lateral surface (M) of the housing (G) and are sealed by an annular cover (A) arranged on the lateral surface (M), wherein the cover (A) has openings (O) as inlet and outlet for a cooling medium, **characterized in that** the cover (A) is arranged so that partial regions (R) of the lateral surface (M) of the housing (G) are not covered by the cover (A), and that the cover (A) is shorter in the axial direction (X) than the lateral surface (M) of the housing (G), and that the partial regions (R) are two annular regions which surround the lateral surface (M) on an end side and which are machined as regards the average roughness value (Ra) and demand on dimensional accuracy with a higher precision than a middle region of the lateral surface (M) fitted with the cooling channels (K) between the partial regions (R), and that the partial regions (R) form as a result of their accessibility when fitting the direct drive, a position reference for fitting the stator (S) and thus also a mechanical reference for installing the direct drive.

2. Cooled housing according to Claim 1, **characterized in that** the partial regions (R) in the axial direction (X) are at least 2 mm wide.

3. Cooled housing according to one of the preceding claims, **characterized in that** seals (D1) are arranged in grooves (N1) of the housing (G) at the end sides and on each side of the cooling channels (K) between the cover (A) and the housing (G).

4. Cooled housing according to one of the preceding claims, **characterized in that** the cover (A) is shrink-fitted onto the housing (G).

5. Cooled housing according to one of the preceding claims, **characterized in that** the openings (O) are off-set relative to one another in the axial direction (X) and in the tangential direction (Y) with respect to the lateral surface (M).

6. Cooled housing according to one of the preceding claims, **characterized in that** a connector (C) is connected to the cover (A) and that the connector (C) has axial and/or radial and/or tangential threaded openings (C1, C2) for the cooling medium supply which correspond with the openings (O) of the cover (A).

7. Cooled housing according to Claim 6, **characterized in that** the cover (A) has a flat region (B1) which serves as a contact bearing surface for the connector (C).

8. Cooled housing according to Claim 6, **characterized in that** the connector (C) has a curved region (B2) which serves as a contact bearing surface for the cover (A).

9. Direct drive whose stator (S) is arranged in a housing (G) according to one of the preceding claims

## Revendications

1. Carter refroidi (G) pour le stator (S) d'un entraînement direct, dans lequel des canaux de refroidissement (K) s'étendent sur une surface latérale extérieure (M) du carter (G) et sont rendus étanches par un recouvrement annulaire (A) disposé sur la surface latérale (M), le recouvrement (A) présentant des ouvertures (O) comme entrée et sortie pour un fluide de refroidissement, **caractérisé en ce que** le recouvrement (A) est disposé de telle sorte que des zones partielles (R) de la surface latérale (M) du carter (G) ne sont pas couvertes par le recouvrement (A), et **en ce que** le recouvrement (A) est plus court dans la direction axiale (X) que la surface latérale (M) du carter (G), et **en ce que** les zones partielles (R) sont deux zones annulaires périphériques en face frontale sur la surface latérale (M) qui sont travaillées concernant la rugosité moyenne (Ra) et le respect des dimensions avec une plus grande précision qu'une zone centrale, équipée des canaux de refroidissement (K), de la surface latérale (M) entre les zones partielles (R), et **en ce que** les zones partielles (R) forment grâce à leur accessibilité lors du montage de l'entraînement direct une référence de position pour le montage du stator (S) et donc aussi une référence mécanique pour une installation de l'entraînement direct.

2. Carter refroidi selon la revendication 1, **caractérisé en ce que** les zones partielles (R) ont une largeur d'au moins 2 mm dans la direction axiale (X).

3. Carter refroidi selon l'une quelconque des revendications précédentes, **caractérisé en ce qu'**en face frontale et sur les deux côtés des canaux de refroidissement (K), entre le recouvrement (A) et le boîtier (G), des joints d'étanchéité (D1) sont disposés dans des rainures (N1) du carter (G).

4. Carter refroidi selon l'une quelconque des revendications précédentes, **caractérisé en ce que** le recouvrement (A) est fretté sur le boîtier (G).

5. Carter refroidi selon l'une quelconque des revendications précédentes, **caractérisé en ce que** les ouvertures (O) sont mutuellement décalées par rapport à la surface latérale (M) dans la direction axiale (X) et dans la direction tangentielle (Y).

6. Carter refroidi selon l'une quelconque des revendications précédentes, **caractérisé en ce qu'**une pièce de raccordement (C) est reliée au recouvrement (A), et **en ce que** la pièce de raccordement (C) présente des ouvertures filetées (C1, C2) axiales et/ou radiales et/ou tangentielles pour l'alimentation en fluide de refroidissement qui correspondent aux ouvertures (O) du recouvrement (A).

7. Carter refroidi selon la revendication 6, **caractérisé en ce que** le recouvrement (A) présente une zone plane (B1) qui sert de surface d'appui pour la pièce de raccordement (C).

8. Carter refroidi selon la revendication 6, **caractérisé en ce que** la pièce de raccordement (C) présente une zone courbe (B2) qui sert de surface d'appui pour le recouvrement (A).

9. Entraînement direct dont le stator (S) est disposé dans un carter (G) selon l'une quelconque des revendications précédentes.
